# EUROPEAN PATENT SPECIFICATION

(11) **EP 3 704 204 B1**
(45) Date of publication and mention of the grant of the patent: **10.08.2022**
(21) Application number: 18812108.1
(22) Date of filing: 26.11.2018
(51) Int. Cl.: C09K 5/04

(54) **LOW GWP REFRIGERANT BLENDS**
KÄLTEMITTELMISCHUNGEN MIT NIEDRIGEM GWP
MÉLANGES RÉFRIGÉRANTS À FAIBLE PRP

(30) Priority: 27.11.2017 GB 201719692; 12.01.2018 GB 201800521; 06.04.2018 GB 201805792; 04.07.2018 GB 201810959; 24.09.2018 GB 201815477; 15.10.2018 GB 201816781
(43) Date of publication of application: 09.09.2020
(73) Proprietor: RPL Holdings Limited, Altricham, Cheshire WA15 9ST (GB)
(72) Inventor: POOLE, John Edward, Altrincham Cheshire WA15 9ST (GB); POWELL, Richard, York Yorkshire YO32 9YG (GB)
(74) Representative: Hepworth Browne
(86) International application number: PCT/EP2018/082597
(87) International publication number: WO 2019/102008

(56) References cited:
- WO-A1-2016/156812
- WO-A1-2017/151488
- US-A1- 2014 222 699
- US-A1- 2015 315 446
- US-A1- 2016 024 361
- US-A1- 2017 081 576

## Description

This invention relates to refrigerant compositions which can be used in thermal pumps to pump heat from a lower temperature to a higher temperature by the input of work. When such devices are used to generate lower temperatures, they are typically called refrigerators or air conditioners. Where they are used to produce higher temperatures, they are typically termed heat pumps. The same device may supply heating or cooling depending upon the user's requirement. This type of thermal pump may be called a reversible heat pump or reversible air conditioner.

Chlorofluorocarbons (CFCs) such as CFC-12 and R502 and hydrochlorofluorocarbons (HCFCs) such as HCFC-22 have been widely used as refrigerants, but migrate to the stratosphere where they are broken down by ultra violet light producing chlorine atoms that destroy the ozone layer. These Ozone Depleting Substances (ODS) are being replaced by non-ozone depleting alternatives such as hydrofluorocarbons (HFCs), which are non-flammable, efficient and of low toxicity. In certain applications, particularly but not specifically related to low temperature refrigeration systems often used in supermarkets, R502 was the main refrigerant of choice due largely to its lower discharge temperature compared to R22. As a consequence of the global environmental agreement to protect the Ozone Layer embodied in the Montreal Protocol, R502 was banned and was largely replaced by the HFC blends R404A and R507. However, R404A and R507, while being excellent refrigerants in terms of energy efficiency, non-flammability, low toxicity and thermodynamic properties, nevertheless have Global Warming Potentials (GWP)s which are at the high end of the commonly used HFCs.

In this specification the numerical value for a Global Warming Potential (GWP) refer to an Integrated Time Horizon (ITH) of 100 years as contained in the Inter-Governmental Panel on Climate Change Fourth Assessment Report (AR4).

Although R22, which has been widely used in air conditioning systems, has a much lower ability to destroy ozone compared to CFCs, it is being phased out under the Montreal Protocol. Non-ozone depleting R410A has proved an excellent replacement for R22 in new air-conditioning equipment, including split systems, but it is also now being phased-out because the comparatively high GWP (2088) means it is no longer environmentally acceptable.

The EU and other territories have imposed GWP quotas and/or taxes to progressively reduce the availability of R404A, R507 and R410A. These actions have two key consequences. Firstly, there will be shortages of these refrigerants available to service existing equipment and charge new equipment will disrupt the refrigeration and air conditioning industries. Secondly, the price of remaining refrigerant will rapidly increase as supply can no longer meet demand. Without replacement refrigerants, critical equipment, e.g. for preserving food in supermarkets and air-conditioning in hospitals, may stop functioning with serious social repercussions.

The composition of R404A is:

| | |
|---|---|
| R125 | 44%; |
| R143a | 52%; and |
| R134a | 4% |
| (GWP = 3922) | |

The composition of R507 is:

| | |
|---|---|
| R125 | 50%; and |
| R143a | 50% |
| (GWP = 3985) | |

The composition of R410A is:

| | |
|---|---|
| R125 | 50%; and |
| R32 | 50% |
| (GWP = 2088) | |

WO2017/151488 discloses a refrigerant comprising R32, R125, R1234 and R134a.

US2017/081576 discloses azeotrope-like refrigerant compositions comprising R1234ze and at least one compound selected from the group consisting of:
R152a, R227ea, R134a, R125 and combinations thereof.

According to a first aspect of the present invention there is provided a refrigeration composition consisting essentially of:

| | |
|---|---|
| carbon dioxide | 10-35% |

an HFO selected from the group consisting of: R1234yf, R1234ze(E) and mixtures

| | |
|---|---|
| thereof | 45-85wt%; and |
| R227ea | 3-15% |

wherein the percentages are by mass and are selected from the ranges quoted to total 100%.

Exemplary compositions may consist of the recited ingredients.

In this specification percentages or other amounts are by mass unless indicated otherwise. Amounts are selected from any ranges given to total 100%.

The term "consisting of" is used in this specification to refer to compositions which include only the recited ingredients, disregarding trace amounts of any impurities.

The term "consisting essentially of" is used in this specification to refer to compositions which consist of the recited ingredients with the possible addition of minor amounts of any further ingredients which do not substantially alter the essential refrigerant properties of the composition. These compositions include compositions which consist of the recited ingredients. Compositions which consist of the recited ingredients may be particularly advantageous.

This invention relates to low GWP blends, which particularly, but not exclusively, are compositions that can replace R404A, R507 and R410A in new refrigeration and air-conditioning systems. The blends may be also used in existing and modified refrigeration and air conditioning systems so that the continued operation of existing and modified systems is facilitated. The blends have zero Ozone Depletion Potentials, so that they have no adverse effect on stratospheric ozone. The invention also provides compositions which may continue to be used in the event of progressive tightening of GWP restrictions, while minimising the cost to the user.

This invention relates particularly to refrigerant compositions that have GWP values in the range 100 to 500. The values in this range are significantly lower than those of R404A, R507 and R410A. Exemplary compositions may have ASHRAE safety classifications of A1 (low toxicity/non-flammable) or A2L (low toxicity/slightly flammable). The compositions may possess energy efficiencies and cooling capacities at least comparable to the fluids they are replacing. The compositions may have maximum operating pressures no greater than 3 bar preferably 2 bar greater at 45°C than the refrigerants they may replace. Compositions with relatively high GWPs tend to be non-flammable (A1) while compositions with lower GWPs tend to be slightly flammable (A2L). For existing equipment there may be little scope for carrying out physical modifications. Therefore non-flammability (A1) is essential. Compositions with higher GWP values may be required.

For existing equipment, where modifications are possible and especially for new installations designed to exploit their advantageous properties, then blends with lower GWPs may be preferred, even if they have an A2L rating.

The term "glide" has been previously defined as the temperature difference between the bubble point and the dew point at the specified constant pressure. This may be referred to as the 'intrinsic' refrigerant glide. Defined in this way, "glide" is a purely thermodynamic property of a refrigerant and is independent of equipment and operating conditions.

In the condenser where the refrigerant moves from the dew point to the bubble point as it condenses, the observed glide is a combination of the intrinsic glide of the refrigerant plus the glide induced by the pressure drop necessary to maintain the refrigerant flow.

In an evaporator where a portion of the refrigerant has already vaporised in the expansion device for example a valve or capillary tube, a two phase mixture enters the evaporator. In this case the glide is the difference between the entry temperature and the dew point. This difference may depend on operating conditions. The observed glide will be the intrinsic glide of the refrigerant minus the glide caused by the pressure drop in the evaporator required to maintain the refrigerant flow. A measured or calculated evaporator glide under specified conditions may be used.

In this specification glides under the specified operating conditions for the equipment may be classified as follows:

| | |
|---|---|
| 1. Negligible glide | - less than 0.5K |
| 2. Small glide | - 0.5K to 2.0K |
| 3. Medium glide | - more than 2.0K to 5.0K |
| 4. Wide glide | - more than 5K to 10.0K |
| 5. Very wide glide | - more than 10.0K |

Compositions of the present invention may have a wide or very wide temperature glide.

Exemplary compositions may consist essentially of CO₂, an HFO with a normal boiling point less than -15°C, and R227ea. The exemplary HFOs may be selected from R1234yf, R1234ze(E) and mixtures thereof. These fluids may provide a combination of appropriate vapour pressures for formulating R404A, R507 and R410A replacements with low flammability and low toxicity. They may provide compositions where the flammability of the HFOs may be partially or completely compensated for, by the presence of the non-flammable gases CO₂ and R227ea. Furthermore, the relatively high GWP of R227ea can be offset by the very low GWPs of CO₂ and the HFO component.

Exemplary embodiments provide refrigerant compositions for new equipment. However the compositions are not excluded from use in modified equipment for example for use as replacements for existing equipment using R404A, R507 or R410A. The compositions may have GWPs not exceeding 500.

A reduced EU or international GWP quota may provide adequate latitude for compositions having thermodynamic and flammability properties that enable them to be retrofitted into existing designs of R404A. R507 and R410A equipment with few or no modifications. This is advantageous because a retrofit composition minimises the cost to the equipment owner. However, new equipment may be required. The present invention addresses this need.

While hydrocarbons, ammonia and carbon dioxide (CO₂) are technically feasible refrigerants for refrigeration and air-conditioning systems and have considerably lower GWPs than HFCs, they are not direct replacements for R507 and R410A, since they have inherent disadvantages which work against their general usage, particularly in public areas such as supermarkets. Highly flammable hydrocarbons can only be used safely in conjunction with a secondary refrigeration circuit, which reduces energy efficiency and increases costs, or with small charges, which severely limits the maximum cooling duty for which they can be used. Even when such safety precautions have been taken, hydrocarbon refrigerants and ammonia have caused building damage, injury and death. CO₂ must be used in the transcritical state on the high-pressure side of the system to allow heat rejection to ambient air. Pressures are often in excess of 100 bar, again resulting in an energy penalty and also a significantly higher capital cost compared to conventional R404A, R507 and R410A systems. Ammonia is markedly toxic. Leaks from industrial refrigeration installations may cause death and injury. Because of these adverse properties, hydrocarbons, ammonia and CO₂ cannot be retrofitted into existing R404A, R507 or R410A units.

Embodiments of this invention enable use of new equipment including blends, consisting essentially of or consisting of CO₂, R1234yf or R1234ze(E), or mixtures thereof and R227ea having GWPs less than 500, for example less than 150, that are capable of operating at maximum pressures comparable to those of R404A (16.2 bara at 35°C), R507 and R410A (up to 20 bara at 35°C) while providing similar refrigeration performances.

Exemplary compositions have direct GWP values which are less than about 500. GWP values are widely recorded in the literature for example as published by the US Environmental Protection Agency (EPA) or IPCC Reports.

Advantageous embodiments of this invention consist essentially of blends of carbon dioxide and R1234ze(E) and/or R1234yf and R227ea, in the presently claimed proportions. These compositions may have safety classifications of A1 or A2L according to ASHRAE Standard 34 while providing similar or superior refrigerating effects and performances in comparison to the refrigerants they are intended to replace. The compositions may be used as refrigerants in new, original (OEM) equipment.

In a first exemplary embodiment the compositions may be used in air conditioning equipment operating at an evaporating temperature in the range about 0°C to about 15°C, for example from about 2°C to about 15°C, for example in equipment designed for use with R410A.

In a second exemplary embodiment the compositions may be used in low temperature refrigeration equipment operating at an evaporating temperature for example from about -15°C to about -40°C, for example in equipment designed for use with R404A or R507.

Exemplary compositions of this invention are capable of retaining the performance of the existing refrigerant when used as a complete replacement for the existing refrigerant.

The following properties may be achieved.

The GWP of the refrigerant should be lower than the GWP of the refrigerant to be replaced.

The cooling capacity of the refrigerant should be similar, for example (±20%) to that of the original refrigerant. This is important to enable the equipment to function adequately in a hot environment.

The discharge pressure should not exceed the maximum pressure rating of the equipment.

The discharge temperature should not significantly exceed the discharge temperature that the equipment is designed for. If the discharge temperature is excessive then the working life of the equipment may be reduced.

It is an advantage that the compositions in accordance with this invention may have discharge temperatures which are lower than may be expected following a standard calculation, for example using the NIST (National Institute of Standards and Technology, USA) Cycle D method. Exemplary compositions may have discharge temperatures which are lower than the calculated values and for example about 5°C to 10°C above the measured values for R404A, R507 or R410A.

The power consumption of the equipment when using the replacement refrigerant should not be excessive in comparison to the power consumption when using the original refrigerant.

Exemplary compositions may have the further advantage that they are not azeotropes or azeotrope-like. Preferred compositions boil over a temperature range greater than about 10°C, for example greater than 20°C.

It is a common belief that an azeotrope-like composition is necessary. The present inventors have unexpectedly discovered that azeotrope-like compositions are not necessary and may be disadvantageous. This discovery is particularly useful when using a direct heat exchange (DX) exchanger in which a progressive increase in temperature is dependent on the glide of the refrigerant.

In condenser equipment using a refrigerant composition of this invention the pressure drop induced glide is in the same direction as the intrinsic refrigerant glide so that the effects are additive.

In contrast in an evaporator the pressure drop glide is in the opposite direction to the refrigerant glide so that the two effects may partially or completely cancel out. An evaporator cools, for example, an air stream or a liquid stream over a range from a higher temperature to lower temperature. If the temperature glide of the evaporating refrigerant is significantly greater than the required cooling range then the efficiency on the unit may be compromised. Preferably glide should be equal to or less that the range.

A preferred refrigerant composition may consist or consist essentially of:

| | |
|---|---|
| carbon dioxide | 10-25% |

an HFO selected from the group consisting of : R1234ze(E), R1234yf

| | |
|---|---|
| and mixtures thereof | 60-83%; and R227ea 3-12% |

wherein the percentages are by mass and are selected from the ranges quoted to total 100%.

For compositions in which lower glides are required use of R1234yf may be preferred over R1234ze(E).

R227ea has a relatively high GWP of 3220, but is non-flammable and tends to co-distil with R1234ze(E) and R1234yf, facilitating the formulation of non-flammable blends. For blends with a GWP not exceeding a GWP of 500 then the maximum R227ea content may be about 15.1%; for a GWP not exceeding 300 the maximum may be about 9.2%.

The present invention may enable the replacement of R404A, R507 and R410A, the most commonly used refrigerants in refrigeration and air-conditioning equipment, enabling a substantial reduction in GWP exceeding 80% by providing blends having a GWP between 1 and 500 and without any reduction in performance including energy efficiency and capacity.

An exemplary refrigerant composition, may consist or consist essentially of:

| | |
|---|---|
| carbon dioxide | 22% |

an HFO selected from the group consisting of: R1234yf, R1234ze(E) and mixtures

| | |
|---|---|
| thereof, | 69% |
| R227ea | 9% |

wherein the percentages are by mass.

An exemplary refrigerant composition which may be used to completely or partially replace R404A, R507 or R410A may consist or consist essentially of.

| | |
|---|---|
| carbon dioxide | 21-30% |
| R1234ze | 60-71% |
| R227ea | 7-10% |

wherein the percentages are by mass.

An exemplary refrigerant composition which may be used to completely or partially replace R404A, R507 or R410A may consist or consist essentially of.

| | |
|---|---|
| carbon dioxide | 15-25% |
| R1234ze | 60-75% |
| R227ea | 6-12% |

wherein the percentages are by mass.

An exemplary refrigerant composition may consist or consist essentially of one of the following compositions:
(a)

| | |
|---|---|
| carbon dioxide | 25% |
| R1234ze | 66% |
| R227ea | 9% |

wherein the percentages are by mass.
(b)

| | |
|---|---|
| carbon dioxide | 15% |
| R1234ze | 73% |
| R227ea | 12% |

wherein the percentages are by mass.
(c)

| | |
|---|---|
| carbon dioxide | 20% |
| R1234ze | 70% |
| R227ea | 10% |

wherein the percentages are by mass.
(d)

| | |
|---|---|
| carbon dioxide | 20% |
| R1234ze | 68% |
| R227ea | 12% |

wherein the percentages are by mass.

An exemplary refrigerant composition, which may be used to provide a new equipment alternative for R404A, R507 or R410A, the ratio of the HFO component to R227ea may be in the range of about 5 to 8:1, preferably about 6 to 7:1, more preferably about 7:1.

An exemplary refrigerant composition, which may be used to provide an extender or new equipment alternative for R404A, R507 or R410A may consist or consist essentially of:

| | |
|---|---|
| carbon dioxide | 10-30% |
| an HFO selected from R1234yf, R1234ze(E) and mixtures thereof | 45-85% |
| R227ea | 3-15% |

wherein the percentages are by mass and are selected from the ranges quoted to total 100%.

An exemplary refrigerant composition, which may be used to provide an extender or new equipment alternative for R404A, R507 or R410A may consist or consist essentially of:

| | |
|---|---|
| carbon dioxide | 10-25% |

an HFO selected from R1234yf, R1234ze(E) and mixtures thereof 60-83%

| | |
|---|---|
| R227ea | 3-12% |

wherein the percentages are by mass and are selected from the ranges quoted to total 100%.

An exemplary refrigerant composition, which may be used to provide an extender or new equipment alternative for R404A or R507 may consist or consist essentially of:

| | |
|---|---|
| carbon dioxide | 22% |
| R1234ze(E) or R1234yf | 69%; and |
| R227ea | 9% |

wherein the percentages are by mass.

An exemplary refrigerant composition, which may be used to provide an extender or new equipment alternative for R410A may consist or consist essentially of:

| | |
|---|---|
| carbon dioxide | 21-30% |
| R1234ze(E) | 60-71% |
| R227ea | 7-10% |

wherein the percentages are by mass and are selected from the ranges quoted to total 100%.

An exemplary refrigerant composition, which may be used to provide an extender or new equipment alternative for R410A may consist or consists essentially of:

| | |
|---|---|
| carbon dioxide | 25% |
| R1234ze(E) or R1234yf | 66%; and |
| R227ea | 9% |

wherein the percentages are by mass.

A preferred composition for a blend with a GWP not exceeding 500 may consist or consist essentially of:

| | |
|---|---|
| carbon dioxide | 5-40% |
| R1234yf,R1234ze(E) or a mixture thereof | 45-80% |
| R227ea | 9.2-15.5% |

wherein the percentages are by mass and are selected from the ranges quoted to total 100%.

In the above composition the amount of each of R1234yf and R1234ze(E) can vary independently from 0% to 80%.

An exemplary refrigerant consists essentially of:

| | |
|---|---|
| carbon dioxide | 20% |
| R1234yf | 71% |
| R227ea | 9% |

wherein the percentages are by mass and are selected from the ranges quoted to total 100%.

An exemplary refrigerant consists essentially of:

| | |
|---|---|
| carbon dioxide | 15.5% |

| | |
|---|---|
| R1234yf | 75.5% |
| R227ea | 9% |

wherein the percentages are by mass and are selected from the ranges quoted to total 100%.

An exemplary refrigerant consists essentially of:

| | |
|---|---|
| carbon dioxide | 20% |
| R1234ze(E) | 71% |
| R227ea | 9% |

wherein the percentages are by mass and are selected from the ranges quoted to total 100%.

A further exemplary refrigerant consists or consists essentially of:

| | |
|---|---|
| carbon dioxide | 22% |
| R1234ze(E) | 69% |
| R227ea | 9% |

wherein the percentages are by mass and are selected from the ranges quoted to total 100%.

As the availabilities of high GWP R404A, R507 and R410A become constrained by the EU F-Gas regulations and similar legislation globally following the ratification of the Kigali Amendment to the Montreal Protocol, insufficient quantities of these refrigerants will be available to service existing equipment. The problem is already affecting the EU which is limiting availability by imposing GWP quotas on suppliers from 2018. Embodiments of this invention may overcome the quota limitation by providing refrigerants that can be used to top-up R404A, R507 and R410A units allowing them to operate for at least further years. Such top-up blends are preferably ASHRAE A1 and have suction capacities and maximum operating temperatures comparable to the refrigerants they are replacing. Their GWPs may be less than 500 and preferably less than 300.

A preferred top-up refrigerant consists essentially of:

| | |
|---|---|
| carbon dioxide | 20% |
| R1234yf | 71% |
| R227ea | 9% |

A preferred top-up refrigerant consists essentially of:

| | |
|---|---|
| carbon dioxide | 15.5% |
| R1234yf | 75.5% |
| R227ea | 9% |

A preferred top-up refrigerant consists essentially of:

| | |
|---|---|
| carbon dioxide | 20% |
| R1234ze(E) | 71% |
| R227ea | 9% |

A further preferred top-up refrigerant consists essentially of:

| | |
|---|---|
| carbon dioxide | 22% |
| R1234ze(E) | 69% |
| R227ea | 9% |

The present invention enables the replacement of R404A, R507 and R410A, the most commonly used refrigerants in refrigeration and air-conditioning equipment, providing a substantial reduction in GWP exceeding 80% with blends having a GWP between about 100, for example about 150 and about 500, and without any reduction in performance including energy efficiency and capacity.

Each blend that is the subject of this invention may be used in a thermal pump lubricated by an oxygen containing oil, for example POE or PAG, or by such oils mixed with a hydrocarbon lubricant up to 50%, for example a mineral oil, alkyl benzene or polyalpha olefin.

Each blend that is the subject of this invention may be used in a thermal pump lubricated by an oxygen containing oil, for example POE or PAG, or by such oils mixed with a hydrocarbon lubricant up to 50%, for example a mineral oil, alkyl benzene and polyalpha olefin.

The invention is further described by means of examples but not in any limitative sense.

### Example 1

The performances of Blends 1 to 4 whose compositions are shown in Table 1, were modelled for a typical air conditioning system using a Rankine Cycle program with thermodynamic data generated by NIST's REFPROP v10. The performance of R410A is included for comparison.

The suction specific capacities, discharge pressures and coefficients of performance (energy efficiency) of the novel blends are comparable to the values for R410A so provide viable alternatives, but have much lower GWPs.

**Table 1**

| | | Blend 1 | Blend 2 | Blend 3 | Blend 4 | R410A |
|---|---|---|---|---|---|---|
| Component | | | | | | |
| R125 | | 0 | 0 | 0 | 0 | 0.5 |
| R143a | | 0 | 0 | 0 | 0 | 0 |
| R134a | | 0 | 0 | 0 | 0 | 0 |
| carbon dioxide | | 0.22 | 0.22 | 0.25 | 0.25 | 0 |
| R1234yf | | 0.69 | 0 | 0.66 | 0 | 0 |
| R227ea | | 0.09 | 0.09 | 0.09 | 0.09 | 0 |
| R1234ze | | 0 | 0.69 | 0 | 0.66 | 0 |
| R32 | | 0 | 0 | 0 | 0 | 0.5 |
| | | | | | | |
| GWP | | 302 | 306 | 302 | 306 | 2088 |
| | | | | | | |
| | | | | | | |
| **Results** | | | | | | |
| **Input** | | | | | | |
| **Cooling duty** | kW | 1 | 1 | 1 | 1 | 1 |
| | | | | | | |
| **Condenser** | | | | | | |
| Midpoint | C | 45 | 45 | 45 | 45 | 45 |
| Subcool | kJ/kg | 5 | 5 | 5 | 5 | 5 |
| | | | | | | |
| **Evaporator** | | | | | | |
| Midpoint | C | 7 | 7 | 7 | 7 | 7 |
| Superheat | C | 5 | 5 | 5 | 5 | 5 |
| | | | | | | |
| **Compressor** | | | | | | |
| Isentropic efficiency | | 0.7 | 0.7 | 0.7 | 0.7 | 0.7 |
| Electric motor efficiency | | 0.9 | 0.9 | 0.9 | 0.9 | 0.9 |
| Volumetric efficiency | | 0.9 | 0.9 | 0.9 | 0.9 | 0.9 |
| | | | | | | |
| **Output** | | | | | | |
| **Condenser** | | | | | | |
| Pressure | bara | 28.24 | 24.36 | 30.45 | 26.47 | 27.30 |
| Dew point | C | 60.64 | 62.75 | 60.84 | 63.01 | 45.06 |
| Bubble point | C | 29.36 | 27.25 | 29.16 | 26.99 | 44.94 |
| Mid point | C | 45.00 | 45.00 | 45.00 | 45.00 | 45 |
| Glide | K | 31.28 | 35.50 | 31.67 | 36.02 | 0.12 |
| Exit temperature | C | 24.36 | 22.25 | 24.16 | 21.99 | 39.94 |
| | | | | | | |
| **Evaporator** | | | | | | |
| Pressure | bara | 9.51 | 7.62 | 10.41 | 8.41 | 9.93 |
| Entry temperature | C | -5.46 | -7.27 | -6.25 | -8.16 | 6.96 |
| Dew point | C | 19.46 | 21.27 | 20.25 | 22.16 | 7.04 |
| Mid point | C | 7.00 | 7.00 | 7.00 | 7.00 | 7.00 |
| Glide | K | 24.92 | 28.55 | 26.51 | 30.31 | 0.08 |
| Exit temperature | C | 24.46 | 26.27 | 25.25 | 27.16 | 12.04 |
| | | | | | | |
| **Compressor** | | | | | | |
| Entry temperature to casing | C | 24.46 | 26.27 | 25.25 | 27.16 | 12.0 |
| Entry temperature to compressor | C | 28.98 | 31.45 | 29.86 | 32.42 | 16.2 |
| Discharge temperature | C | 86.65 | 93.67 | 88.79 | 96.05 | 80.0 |
| Compression ratio | | 2.97 | 3.20 | 2.92 | 3.15 | 2.7 |
| Total power input | kW | 0.28 | 0.27 | 0.28 | 0.27 | 0.3 |
| Swept volume | m^3/h | 0.60 | 0.67 | 0.56 | 0.62 | 0.6 |
| **System** | | | | | | |
| Suction specific volume | kJ/m^3 | 5377 | 4800 | 5777 | 5193 | 5260 |
| COP cooling | | 3.58 | 3.70 | 3.56 | 3.67 | 3.53 |
| Mass flow rate | kg/s | 0.00619 | 0.00541 | 0.00609 | 0.00533 | 0.00613 |

### Example 2

The performances of Blends 5 to 8 whose compositions are shown in Table 2, were modelled for a typical low temperature refrigeration system using a Rankine Cycle program with thermodynamic data generated by NIST's REFPROP v10. The performance of R404A is included for comparison.

The suction specific capacities, discharge pressures and coefficients of performance (energy efficiency) of the novel blends are comparable to the values for R404A so provide viable alternatives, but have much lower GWPs.

**Table 2**

| | | Blend 5 | Blend 6 | Blend 7 | Blend 8 | R404A |
|---|---|---|---|---|---|---|
| Component | | | | | | |
| R125 | | 0 | 0 | 0 | 0 | 0.44 |
| R143a | | 0 | 0 | 0 | 0 | 0.52 |
| R134a | | 0 | 0 | 0 | 0 | 0.04 |
| carbon dioxide | | 0.21 | 0.21 | 0.22 | 0.22 | 0 |
| R1234yf | | 0.65 | 0.33 | 0.69 | 0 | 0 |
| R227ea | | 0.14 | 0.05 | 0.09 | 0.09 | 0 |
| R1234ze | | 0 | 0.41 | 0 | 0.69 | 0 |
| R32 | | 0 | 0 | 0 | 0 | 0 |
| | | 0 | 0 | | | |
| GWP | | 469.65 | 170.7 | 302.19 | 306.33 | 3943 |
| | | | | | | |
| | | | | | | |
| **Results** | | | | | | |
| **Input** | | | | | | |
| **Cooling duty** | kW | 1 | 1 | 1 | 1 | |
| | | | | | | |
| **Condenser** | | | | | | |
| Midpoint | C | 35 | 35 | 35 | 35 | 35 |
| Subcool | K | 5 | 5 | 5 | 5 | 5 |
| | | | | | | |
| | | | | | | |
| **Evaporator** | | | | | | |
| Midpoint | C | -35 | -35 | -35 | -35 | -35 |
| Superheat | C | 5 | 5 | 5 | 5 | 5 |
| | | | | | | |
| **Compressor** | | | | | | |
| Isentropic efficiency | | 0.7 | 0.7 | 0.7 | 0.7 | 0.7 |
| Electric motor efficiency | | 0.9 | 0.9 | 0.9 | 0.9 | 0.9 |
| Volumetric efficiency | | 0.9 | 0.9 | 0.9 | 0.9 | 0.9 |
| | | | | | | |
| **Output** | | | | | | |
| **Condenser** | | | | | | |
| Pressure | bara | 22.2 | 20.5 | 22.74 | 19.36 | 16.12 |
| Dew point | C | 51.9 | 52.0 | 51.72 | 53.84 | 35.2 |
| Bubble point | C | 18.1 | 18.0 | 18.28 | 16.16 | 34.8 |
| Mid point | C | 35.0 | 35.0 | 35.00 | 35.00 | 35.00 |
| Glide | K | 33.8 | 33.9 | 33.44 | 37.67 | 0.4 |
| Exit temperature | C | 13.1 | 13.0 | 13.28 | 11.16 | 29.8 |
| | | | | | | |
| **Evaporator** | | | | | | |
| Pressure | bara | 1.78 | 1.52 | 1.88 | 1.32 | 1.65 |
| Entry temperature | C | -43.8 | -44.0 | -43.90 | -45.10 | -35.2 |
| Dew point | C | -26.2 | -26.0 | -26.10 | -24.90 | -34.8 |
| Mid point | C | -35 | -35 | -35.00 | -35.00 | -35 |
| Glide | K | 17.6 | 18.0 | 17.80 | 20.20 | 0.5 |
| Exit temperature | C | -21.2 | -21.0 | -21.10 | -19.90 | -29.8 |
| | | | | | | |
| **Compressor** | | | | | | |
| Entry temperature to casing | C | -21.2 | -21.0 | -21.10 | -19.90 | -29.8 |
| Entry temperature to compressor | C | -8.4 | -7.3 | -8.12 | -5.27 | -20.2 |
| Discharge temperature | C | 110.9 | 118.3 | 112.29 | 126.74 | 77.4 |
| Compression ratio | | 12.4 | 13.4 | 12.13 | 14.69 | 9.75 |
| Total power input | kW | 0.73 | 0.72 | 0.73 | 0.71 | 0.74 |
| Swept volume | m^3/h | 3.31 | 3.67 | 3.17 | 4.00 | 4.15 |
| **System** | | | | | | |
| Suction specific volume | kJ/m^3 | 979 | 882 | 1022 | 810 | 780 |
| COP cooling | | 1.38 | 1.39 | 1.38 | 1.42 | 1.36 |
| Mass flow rate | kg/s | 0.00681 | 0.00627 | 0.00669 | 0.00583 | 0.00933 |

## Claims

1. A refrigerant composition consisting essentially of:
| | |
|---|---|
| carbon dioxide | 10-35% |
an HFO selected from the group consisting of: R1234yf, R1234ze(E) and mixtures
| | |
|---|---|
| thereof | 45-85%; and |
| R227ea | 3-15% |
wherein the percentages are by mass and are selected from the ranges quoted to total 100%.

2. A refrigerant composition, as claimed in claim 1 consisting essentially of:
| | |
|---|---|
| carbon dioxide | 10-25% |
an HFO selected from the group consisting of: R1234yf, R1234ze(E) and mixtures
| | |
|---|---|
| thereof | 60-83%; and |
| R227ea | 4-12% |
wherein the percentages are by mass and are selected from the ranges quoted to total 100%.

3. A refrigerant composition, as claimed in claim 2 consisting essentially of:
| | |
|---|---|
| carbon dioxide | 22% |
an HFO selected from the group consisting of: R1234ze(E), R1234yf and mixtures
| | |
|---|---|
| thereof | 69%; and |
| R227ea | 9% |
wherein the percentages are by mass.

4. A refrigerant composition, as claimed in claim 2 consisting essentially of:
| | |
|---|---|
| carbon dioxide | 25% |
an HFO selected from the group consisting essentially of R1234ze(E), R1234yf and
| | |
|---|---|
| mixtures thereof | 66%; and |
| R227ea | 9% |
wherein the percentages are by mass.

5. A refrigerant composition, as claimed in claim 1 consisting essentially of:
| | |
|---|---|
| carbon dioxide | 21-30% |
| R1234ze(E) | 60-71%; and |
| R227ea | 7-10% |
wherein the percentages are by mass and are selected from the ranges quoted to total 100%.

6. A refrigerant composition, as claimed in claim 1 consisting essentially of:
| | |
|---|---|
| carbon dioxide | 15-25% |
| R1234ze(E) | 60-75%; and |
| R227ea | 6-12% |
wherein the percentages are by mass and are selected from the ranges quoted to total 100%.

7. A refrigerant composition as claimed in Claim 1, consisting essentially of one of the following compositions:
(a)
| | |
|---|---|
| carbon dioxide | 15% |
| R1234ze(E) | 75%; and |
| R227ea | 10% |
wherein the percentages are by mass.
(b)
| | |
|---|---|
| carbon dioxide | 15% |
| R1234ze(E) | 73%; and |
| R227ea | 12% |
wherein the percentages are by mass.
(c)
| | |
|---|---|
| carbon dioxide | 20% |
| R1234ze(E) | 70%; and |
| | |
|---|---|
| R227ea | 10% |
wherein the percentages are by mass.
(d)
| | |
|---|---|
| carbon dioxide | 20% |
| R1234ze(E) | 68%; and |
| R227ea | 12% |
wherein the percentages are by mass.

8. A refrigerant composition as claimed in Claim 1, consisting essentially of
| | |
|---|---|
| carbon dioxide | 20-35% |
and an HFC selected from the group consisting of R1234yf, R1234ze(E), R227ea and
| | |
|---|---|
| mixtures thereof | 65-80% |
wherein the percentages are by mass and are selected from the ranges quoted to total 100%.

9. A refrigerant composition as claimed in Claim 1, wherein the ratio by weight of R1234yf, R1234ze(E), and mixtures thereof to R227ea is in the range of 15:1 to about 8:1.

10. A refrigerant composition as claimed in Claim 1, wherein the ratio by weight of R1234yf, R1234ze(E), and mixtures thereof to R227ea is in the range of 6:1 to about 7:1.

11. A refrigerant composition as claimed in Claim 1, wherein the ratio by weight of R1234yf, R1234ze(E), and mixtures thereof to R227ea is in the range of 7:1.

12. A refrigerant composition as claimed in Claim 1 consisting essentially of one of the following compositions:
(a)
| | |
|---|---|
| carbon dioxide | 20% |
| R1234yf | 71% |
| | |
|---|---|
| R227ea | 9% |
wherein the percentages are by mass.
(b)
| | |
|---|---|
| carbon dioxide | 15.5% |
| R1234yf | 75.5% |
| R227ea | 9% |
wherein the percentages are by mass.
(c)
| | |
|---|---|
| carbon dioxide | 20% |
| R1234ze(E) | 71% |
| R227ea | 9% |
wherein the percentages are by mass.
(d)
| | |
|---|---|
| carbon dioxide | 22% |
| R1234ze(E) | 69% |
| R227ea | 9% |
wherein the percentages are by mass.
(e)
| | |
|---|---|
| carbon dioxide | 25% |
| R1234ze(E) | 66% |
| R227ea | 9% |
wherein the percentages are by mass.

## Patentansprüche

1. Kältemittelzusammensetzung, die im Wesentlichen besteht aus:
10-35% Kohlendioxid
45-85% eines Hydrofluorolefins ausgewählt aus der Gruppe bestehend aus:
R1234yf, R1234ze(E) und Mischungen davon; und
3-15% R227ea,
wobei die Prozentsätze auf die Masse bezogen sind und aus den angegebenen Bereichen ausgewählt sind, auf insgesamt 100%.

2. Kältemittelzusammensetzung gemäß Anspruch 1, die im Wesentlichen besteht aus:
10-25% Kohlendioxid
60-83% eines Hydrofluorolefins ausgewählt aus der Gruppe bestehend aus:
R1234yf, R1234ze(E) und Mischungen davon; und
4-12% R227ea,
wobei die Prozentsätze auf die Masse bezogen sind und aus den angegebenen Bereichen ausgewählt sind, auf insgesamt 100%.

3. Kältemittelzusammensetzung gemäß Anspruch 2, die im Wesentlichen besteht aus:
22% Kohlendioxid
69% eines Hydrofluorolefins ausgewählt aus der Gruppe bestehend aus:
R1234yf, R1234ze(E) und Mischungen davon; und
9 % R227ea,
wobei die Prozentsätze auf die Masse bezogen sind.

4. Kältemittelzusammensetzung gemäß Anspruch 2, die im Wesentlichen besteht aus:
25% Kohlendioxid
66% eines Hydrofluorolefins ausgewählt aus der Gruppe bestehend aus:
R1234yf, R1234ze(E) und Mischungen davon; und
9% R227ea,
wobei die Prozentsätze auf die Masse bezogen sind.

5. Kältemittelzusammensetzung gemäß Anspruch 1, die im Wesentlichen besteht aus:
21-30% Kohlendioxid
60-71% R1234ze(E); und
7-10% R227ea,
wobei die Prozentsätze auf die Masse bezogen sind und aus den angegebenen Bereichen ausgewählt sind, auf insgesamt 100%.

6. Kältemittelzusammensetzung gemäß Anspruch 1, die im Wesentlichen besteht aus:
15-25% Kohlendioxid
65-70% R1234ze(E); und
6-12% R227ea,
wobei die Prozentsätze auf die Masse bezogen sind und aus den angegebenen Bereichen ausgewählt sind, auf insgesamt 100%.

7. Kältemittelzusammensetzung gemäß Anspruch 1, die im Wesentlichen aus einer der folgenden Zusammensetzungen besteht:
(a)
15% Kohlendioxid
75% R1234ze(E); und
10% R227ea,
wobei die Prozentsätze auf die Masse bezogen sind.
(b)
15% Kohlendioxid
73% R1234ze(E); und
12% R227ea,
wobei die Prozentsätze auf die Masse bezogen sind.
(c)
20% Kohlendioxid
70% R1234ze(E); und
10% R227ea,
wobei die Prozentsätze auf die Masse bezogen sind.
(d)
20% Kohlendioxid
68% R1234ze(E); und
12% R227ea,
wobei die Prozentsätze auf die Masse bezogen sind.

8. Kältemittelzusammensetzung gemäß Anspruch 1, die im Wesentlichen besteht aus:
20-35% Kohlendioxid
65-80% eines Hydrofluorolefins ausgewählt aus der Gruppe bestehend aus:
R1234yf, R1234ze(E) und Mischungen davon,
wobei die Prozentsätze auf die Masse bezogen sind und aus den
angegebenen Bereichen ausgewählt sind, auf insgesamt 100%.

9. Kältemittelzusammensetzung gemäß Anspruch 1, wobei das Gewichtsverhältnis von R1234yf, R1234ze(E) und Mischungen davon zu R227ea im Bereich von 15:1 bis ungefähr 8:1 liegt.

10. Kältemittelzusammensetzung gemäß Anspruch 1, wobei das Gewichtsverhältnis von R1234yf, R1234ze(E) und Mischungen davon zu R227ea im Bereich von 6:1 bis ungefähr 7:1 liegt.

11. Kältemittelzusammensetzung gemäß Anspruch 1, wobei das Gewichtsverhältnis von R1234yf, R1234ze(E) und Mischungen davon zu R227ea im Bereich von ungefähr 7:1 liegt.

12. Kältemittelzusammensetzung gemäß Anspruch 1, die im Wesentlichen aus einer der folgenden Zusammensetzungen besteht:
(a)
20% Kohlendioxid
71% R1234ze(E); und
9% R227ea,
wobei die Prozentsätze auf die Masse bezogen sind.
(b)
15,5% Kohlendioxid
75,5% R1234ze(E); und
9% R227ea,
wobei die Prozentsätze auf die Masse bezogen sind.
(c)
20% Kohlendioxid
71% R1234ze(E); und
9% R227ea,
wobei die Prozentsätze auf die Masse bezogen sind.
(d)
22% Kohlendioxid
69% R1234ze(E); und
9% R227ea,
wobei die Prozentsätze auf die Masse bezogen sind.
(e)
25% Kohlendioxid
66% R1234ze(E); und
9% R227ea,
wobei die Prozentsätze auf die Masse bezogen sind.

## Revendications

1. Composition réfrigérante consistant essentiellement en :
| | |
|---|---|
| dioxyde de carbone | 10-35% |
| une HFO choisie dans le groupe consistant en : | 45-85% ; et |
| R1234yf, R1234ze(E) et des mélanges de ceux-ci | |
| R227ea | 3-15% |
selon laquelle les pourcentages sont donnés en poids et sont choisis dans les fourchettes citées pour faire un total de 100%.

2. Composition réfrigérante selon la revendication 1, consistant essentiellement en :
| | |
|---|---|
| dioxyde de carbone | 10-25% |
| une HFO choisie dans le groupe consistant en : | 60-83% ; et |
| R1234yf, R1234ze(E) et des mélanges de ceux-ci | |
| R227ea | 4-12% |
selon laquelle les pourcentages sont donnés en poids et sont choisis dans les fourchettes citées pour faire un total de 100%.

3. Composition réfrigérante selon la revendication 2, consistant essentiellement en :
| | |
|---|---|
| dioxyde de carbone | 22% |
| une HFO choisie dans le groupe consistant en : | 69% ; et |
| R1234ze(E), R1234yf et des mélanges de ceux-ci | |
| R227ea | 9% |
selon laquelle les pourcentages sont donnés en poids.

4. Composition réfrigérante selon la revendication 2, consistant essentiellement en :
| | |
|---|---|
| dioxyde de carbone | 25% |
| une HFO choisie dans le groupe consistant | 66% ; et |
| essentiellement en R1234ze(E), R1234yf et des mélanges | |
| de ceux-ci | |
| R227ea | 9% |
selon laquelle les pourcentages sont donnés en poids.

5. Composition réfrigérante selon la revendication 1, consistant essentiellement en :
| | |
|---|---|
| dioxyde de carbone | 21-30% |
| R1234ze(E) | 60-71% ; et |
| R227ea | 7-10% |
selon laquelle les pourcentages sont donnés en poids et sont choisis dans les fourchettes citées pour faire un total de 100%.

6. Composition réfrigérante selon la revendication 1, consistant essentiellement en :
| | |
|---|---|
| dioxyde de carbone | 15-25% |
| R1234ze(E) | 60-75% ; et |
| R227ea | 6-12% |
selon laquelle les pourcentages sont donnés en poids et sont choisis dans les fourchettes citées pour faire un total de 100%.

7. Composition réfrigérante selon la revendication 1, consistant essentiellement en l'une des compositions suivantes :
(a)
| | |
|---|---|
| dioxyde de carbone | 15% |
| R1234ze(E) | 75% ; et |
| R227ea | 10% |
selon laquelle les pourcentages sont donnés en poids.
(b)
| | |
|---|---|
| dioxyde de carbone | 15% |
| R1234ze(E) | 73% ; et |
| R227ea | 12% |
selon laquelle les pourcentages sont donnés en poids.
(c)
| | |
|---|---|
| dioxyde de carbone | 20% |
| R1234ze(E) | 70% ; et |
| R227ea | 10% |
selon laquelle les pourcentages sont donnés en poids.
(d)
| | |
|---|---|
| dioxyde de carbone | 20% |
| R1234ze(E) | 68% ; et |
| R227ea | 12% |
selon laquelle les pourcentages sont donnés en poids.

8. Composition réfrigérante selon la revendication 1, consistant essentiellement en :
| | |
|---|---|
| dioxyde de carbone | 20-35% |
| une HFO choisie dans le groupe consistant en R1234yf, | 65-80% |
R1234ze(E), R227ea et des mélanges de ceux-ci selon laquelle les pourcentages sont donnés en poids et sont choisis dans les fourchettes citées pour faire un total de 100%.

9. Composition réfrigérante selon la revendication 1, selon laquelle le rapport en poids de R1234yf, R1234ze(E), et des mélanges de ceux-ci au R227ea se situe dans la plage de 15:1 à environ 8:1.

10. Composition réfrigérante selon la revendication 1, selon laquelle le rapport en poids de R1234yf, R1234ze(E), et des mélanges de ceux-ci au R227ea se situe dans la plage de 6:1 à environ 7:1.

11. Composition réfrigérante selon la revendication 1, selon laquelle le rapport en poids de R1234yf, R1234ze(E), et des mélanges de ceux-ci au R227ea se situe dans la plage de 7:1.

12. Composition réfrigérante selon la revendication 1, consistant essentiellement en l'une des compositions suivantes :
(a)
| | |
|---|---|
| dioxyde de carbone | 20% |
| R1234yf | 71% |
| R227ea | 9% |
selon laquelle les pourcentages sont donnés en poids.
(b)
| | |
|---|---|
| dioxyde de carbone | 15,5% |
| R1234yf | 75,5% |
| R227ea | 9% |
selon laquelle les pourcentages sont donnés en poids.
(c)
| | |
|---|---|
| dioxyde de carbone | 20% |
| R1234ze(E) | 71% |
| R227ea | 9% |
selon laquelle les pourcentages sont donnés en poids.
(d)
| | |
|---|---|
| dioxyde de carbone | 22% |
| R1234ze(E) | 69% |
| R227ea | 9% |
selon laquelle les pourcentages sont donnés en poids.
(e)
| | |
|---|---|
| dioxyde de carbone | 25% |
| R1234ze(E) | 66% |
| R227ea | 9% |
selon laquelle les pourcentages sont donnés en poids.
